# EUROPEAN PATENT APPLICATION

(11) **EP 4 846 824 A1**
(43) Date of publication of application: **02.12.2026**
(21) Application number: 26173679.7
(22) Date of filing: 21.04.2026
(51) Int. Cl.: A01B 69/00, B62D 5/09, B65D 5/30

(54) **BY-WIRE ELECTROHYDRAULIC STEERING SYSTEM AND METHOD OF STEER-BY-WIRE CONTROL OF SUCH**

(30) Priority: 30.05.2025 US 202563814513 P; 13.02.2026 US 202619539184
(71) Applicant: Deere & Company, Moline, IL 61265 (US)
(72) Inventor: REHN, NATHANAEL K, 68163 Mannheim (DE); RYDIN, RUSSELL E, 68163 Mannheim (DE)
(74) Representative: Reichert, Christian

(57) **Abstract**

A by-wire electrohydraulic steering system (10) for a work vehicle (1) is disclosed. The system (10) having first and second ground engaging members (2, 3), the electrohydraulic system (10) comprising: a first control valve system (20) responsive to a first set of control signals (22) to control movement of a first function actuator (120) coupled with the first ground engaging member (2) of the work vehicle (1) to effect steering of the first ground engaging member (2); a second control valve system (30) responsive to a second set of control signals (32) to control movement of a second function actuator (130) coupled with the second ground engaging member (3) of the work vehicle (1) to effect steering of the second ground engaging member (3); an electronic control system (40) operatively coupled with the first and second control valve systems (20, 30), the electronic control system (40) being operable to generate the first and second sets of control signals for controlling steering of the first and second ground engaging members (2, 3), the electronic control system (40) being operative to generate a re-route signal (42) based on an obtained control valve fault signal (44); and a routing valve system (50) operatively coupled with the electronic control system (40), the first and second control valve systems (20, 30), and the first and second function actuators (120, 130), the routing valve system (50) being responsive to receiving the re-route signal (42) from the electronic control system (40) to: couple the first control valve system (20) with the second function actuator (130) to control movement of the second function actuator (130) to effect the steering of the second ground engaging member (3) by the first control valve system (20), or couple the second control valve system (30) with the first function actuator (120) to control movement of the first function actuator (120) to effect the steering of the first ground engaging member (2) by the second control valve system (30). Further, a method (600) of steer-by-wire control of such an electrohydraulic system (10) is disclosed.

## Description

### FIELD

The present disclosure relates to steer-by-wire systems and methods in work vehicles and, in particular, to steer-by-wire electrohydraulic systems and methods for use in work vehicles having independently steerable ground engaging members.

### BACKGROUND

Steer-by-wire systems in vehicles eliminate the need for a mechanical linkage between the operator's steering control mechanism(s) and steerable ground engaging members of the vehicle while also permitting the system to achieve control characteristics that are desirable to the operator including a steering "feel" that approximates the familiar steering "feel" provided by traditional systems that use mechanical linkages. Such by-wire systems have been implemented in vehicles of all types including work vehicles such as agricultural vehicles, construction vehicles, forestry vehicles, and the like for reasons including the cost, reliability and precision they provide.

Some work vehicles use such by-wire systems to control steerable ground engaging members such as tracks, tires, or the like independently. In some implementations such as crop spraying for example each of the front ground engaging members as well as each of the back or rear ground engaging members are controlled separately to steer the work vehicle according to desired protocols or patterns for purposes that include the protection of the crops from becoming damaged from contact with the ground engaging members during the spraying operation.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

One or more techniques, systems, and methods are described herein for providing steer-by-wire systems and methods in work vehicles.

One or more techniques, systems, and methods are described herein for providing redundancy in steer-by-wire systems and methods in work vehicles.

One or more techniques, systems, and methods are described herein for providing redundancy in steer-by-wire systems and methods in work vehicles having independently steerable ground engaging members on a common or shared axle or virtual axle.

One or more techniques, systems, and methods are described herein for providing redundancy in steer-by-wire electrohydraulic systems and methods in work vehicles.

One or more techniques, systems, and methods are described herein for providing redundancy in steer-by-wire electrohydraulic systems and methods in work vehicles having independently steerable ground engaging members on a common or shared axle or virtual axle.

One or more techniques, systems, and methods are described herein for providing redundancy in steer-by-wire electrohydraulic systems and methods in work vehicles having independently steerable ground engaging members on a common or shared axle or virtual axle, wherein steering control of otherwise independently steerable ground engaging members on a common or shared axle or virtual axle may be assigned to a functional control valve system of the axle set upon obtaining a signal representative of a fault in a corresponding functional control valve system of the axle set.

By way of example only, and without in any way limiting the claimed subject matter, one or more techniques, systems, and methods are described herein for providing, in an absence of an obtained or otherwise determined or detected signal representative of a fault condition, controlling steering of a left front ground engaging member of a vehicle using a left front wheel steering control valve system and controlling steering of a right front ground engaging member of a vehicle using a right front wheel steering control valve system.

By way of example only, and without in any way limiting the claimed subject matter, one or more techniques, systems, and methods are described herein for providing, based on an obtained or otherwise determined or detected signal representative of a fault condition in the left front wheel steering control valve system, controlling steering of both the left and right front ground engaging members of the vehicle using the right front wheel steering control valve system.

By way of example only, and without in any way limiting the claimed subject matter, one or more techniques, systems, and methods are described herein for providing, based on an obtained or otherwise determined or detected signal representative of a fault condition in the right front wheel steering control valve system, controlling steering of both the left and right front ground engaging members of the vehicle using the left front wheel steering control valve system.

The implementations herein provide mode control of steer-by-wire electrohydraulic systems in work vehicles having independently steerable first and second ground engaging members. In one mode or a first mode, steering of the first ground engaging member of an axle set including the first and second ground engaging members is controlled by a first functional control valve system, and steering of the second ground engaging member of the axle set including the first and second ground engaging members is controlled by a second functional control valve system. In this mode the steering of the first and second ground engaging members is separately and independently controlled by the first and second functional control valve systems, respectively.

In another or second mode of operation such as when a fault is detected or otherwise determined in the second functional control valve system, steering control of the first and second ground engaging members is transferred to the first functional control valve system for control of the second ground engaging member by the first functional control valve system. In this mode of operation the second functional control valve system may be fully deactivated based on the fault or other failure condition being detected or otherwise determined. In an implementation, the second functional control valve system may be fully deactivated based on the fault or other failure condition being detected or otherwise determined even though portions of the second functional control valve system may appear to remain operational. This effectively removes the second functional control valve system from control of the second ground engaging member and recruits the first functional control valve system to control the steering of both the first and second ground engaging members.

In another or third mode of operation such as when a fault is detected or otherwise determined in the first functional control valve system, steering control of the first and second ground engaging members is transferred to the second functional control valve system for control of the first ground engaging member by the second functional control valve system. In this mode of operation the first functional control valve system may be fully deactivated based on the fault or other failure condition being detected or otherwise determined. In an implementation, the first functional control valve system may be fully deactivated based on the fault or other failure condition being detected or otherwise determined even though portions of the first functional control valve system may appear to remain operational. This effectively removes the first functional control valve system from control of the first ground engaging member and recruits the second functional control valve system to control the steering of both the first and second ground engaging members.

In accordance with one aspect of the present disclosure, a by-wire electrohydraulic steering system is provided for a work vehicle having first and second ground engaging members. In accordance with the aspect, the hydraulic system includes a first control valve system, a second control valve system, an electronic control system operatively coupled with the first and second control valve systems, and a routing valve system operatively coupled with the electronic control system, the first and second control valve systems, and the first and second function actuators.

The first control valve system is responsive to a first set of one or more control signals to control movement of a first function actuator coupled with the first ground engaging member of the work vehicle to effect steering of the first ground engaging member.

Similarly, the second control valve system is responsive to one or more second set of control signals to control movement of a second function actuator coupled with the second ground engaging member of the work vehicle to effect steering of the second ground engaging member.

The electronic control system is operatively coupled with the first and second control valve systems, wherein the electronic control system is operable to generate the first and second sets of one or more control signals for controlling the steering of the first and second ground engaging members, and wherein the electronic control system is operative to generate a re-route signal based on an obtained control valve fault signal.

In accordance with the example aspect, the routing valve system is operatively coupled with the electronic control system, the first and second control valve systems, and the first and second function actuators. The routing valve system is responsive to receiving the re-route signal from the electronic control system to either couple the first control valve system with both the first and second function actuators to control the movement of both the first and second function actuators to effect the steering of both the first and second ground engaging members by the first control valve system, or couple the second control valve system with both the first and second function actuators to control the movement of both the first and second functions actuator to effect the steering of the both first and second ground engaging members by the second control valve system.

In any of the implementations, the routing valve system is responsive to receiving the re-route signal from the electronic control system to either control the steering of both the first and second ground engaging members by using the first control valve system or control the steering of both the first and second ground engaging members by using the second control valve system.

In any of the implementations, the electronic control system is operatively coupled with an ECM of the work vehicle, wherein the electronic control system is operative to obtain the control valve fault signal by receiving the control valve fault signal from the ECM of the work vehicle, and wherein the electronic control system is operative to generate the re-route signal based on receiving the control valve fault signal from the ECM of the work vehicle.

In any of the implementations, the electronic control system is operative to obtain the control valve fault signal as a first control valve fault signal representative of a first fault condition detected in the first control valve system, and to generate the re-route signal as a first re-route signal based on the obtained first control valve fault signal, and the routing valve system is responsive to receiving the first re-route signal from the electronic control system to couple the second control valve system with the first function actuator to control the movement of the first function actuator to effect the steering of the first ground engaging member by the second control valve system.

In any of the implementations, the electronic control system is operatively coupled with an ECM of the work vehicle, wherein the electronic control system is operative to obtain the first control valve fault signal by receiving the first control valve fault signal from the ECM of the work vehicle, and wherein the electronic control system is operative to generate the first re-route signal based on receiving the first control valve fault signal from the ECM of the work vehicle.

In any of the implementations, the electronic control system is operative to obtain the control valve fault signal as a second control valve fault signal representative of a second fault condition detected in the second control valve system and to generate the re-route signal as a second re-route signal based on the obtained second control valve fault signal, wherein the routing valve system is responsive to receiving the second re-route signal from the electronic control system to couple the first control valve system with the second function actuator to control the movement of the second function actuator to effect the steering of the second ground engaging member by the first control valve system.

In any of the implementations, the electronic control system is operatively coupled with an ECM of the work vehicle, wherein the electronic control system is operative to obtain the second control valve fault signal by receiving the second control valve fault signal from the ECM of the work vehicle, and wherein the electronic control system is operative to generate the second re-route signal based on receiving the second control valve fault signal from the ECM of the work vehicle.

In any of the implementations, the system further includes a first set of control valve system sensors operatively coupled with the first control valve system and/or with the electronic control system, and a second set of control valve system sensors operatively coupled with the second control valve system and/or with the electronic control system, wherein the first set of control valve system sensors is operative to generate a set of first valve system functionality signals representative of an operational condition of the first control valve system, and wherein the second set of control valve system sensors is operative to generate a set of second valve system functionality signals representative of an operational condition of the second control valve system, wherein the electronic control system is operative to receive the set of first valve system functionality signals, receive the set of second valve system functionality signals, obtain the control valve fault signal by generating the control valve fault signal based on the received sets of the first and second valve system functionality signals, and generate the re-route signal based on the generated control valve fault signal.

In any of the implementations, the electronic control system is operatively coupled with an ECM of the work vehicle, and the electronic control system is operative to transmit a steering alert signal representative of the generated control valve fault signal to the ECM of the work vehicle.

In any of the implementations, the routing valve system includes valve systems responsive to receiving the re-route signal from the electronic control system to either couple the first control valve system with the second function actuator to control the movement of the second function actuator to effect the steering of the second ground engaging member by the first control valve system, or couple the second control valve system with the first function actuator to control the movement of the first function actuator to effect the steering of the first ground engaging member by the second control valve system.

In any of the implementations, the routing valve system includes a direct acting valve responsive to receiving the re-route signal from the electronic control system to either couple the first control valve system with the second function actuator to control the movement of the second function actuator to effect the steering of the second ground engaging member by the first control valve system, or couple the second control valve system with the first function actuator to control the movement of the first function actuator to effect the steering of the first ground engaging member by the second control valve system.

In any of the implementations, the routing valve system includes at least one valve responsive to receiving the re-route signal from the electronic control system to either couple the first control valve system with the first and second function actuators to control the movement of the first and second function actuators to effect the steering of the second ground engaging member in phase with the first ground engaging member by the first control valve system, or couple the second control valve system with the first and second function actuators to control the movement of the first and second function actuators to effect the steering of the first ground engaging member in phase with the second ground engaging member by the second control valve system.

In any of the implementations, the routing valve system includes at least one valve responsive to receiving the re-route signal from the electronic control system to couple the first control valve system with the second function actuator to control the movement of the second function actuator to effect the steering of the second ground engaging member by the first control valve system, or couple the second control valve system with the first function actuator to control the movement of the first function actuator to effect the steering of the first ground engaging member by the second control valve system.

In any of the implementations, the routing valve system includes a pilot acting valve responsive to receiving the re-route signal from the electronic control system to either couple the first control valve system with the second function actuator to control the movement of the second function actuator to effect the steering of the second ground engaging member by the first control valve system, or couple the second control valve system with the first function actuator to control the movement of the first function actuator to effect the steering of the first ground engaging member by the second control valve system.

In any of the implementations, the at least one valve of the routing valve system includes a valve responsive to receiving the re-route signal from the electronic control system to couple the first control valve system with the first and second function actuators to control the movement of the first and second function actuators to effect the steering of the first and second ground engaging members in mutual phase with each other by the first control valve system, or couple the second control valve system with the first and second function actuators to control the movement of the first and second function actuators to effect the steering of the first and second ground engaging members in mutual phase with each other by the second control valve system.

In accordance with a further aspect of the present disclosure, a method is provided for steer-by-wire control of an electrohydraulic system of a work vehicle having first and second ground engaging members. The method includes controlling by a first control valve system responsive to a first set of control signals movement of a first function actuator coupled with the first ground engaging member of the work vehicle to effect steering of the first ground engaging member, controlling by a second control valve system responsive to a second set of control signals movement of a second function actuator coupled with the second ground engaging member of the work vehicle to effect steering of the second ground engaging member, generating by an electronic control system operatively coupled with the first and second control valve systems a re-route signal based on an obtained control valve fault signal, and responsive to receiving the re-route signal by a routing valve system operatively coupled with the electronic control system, the first and second control valve systems, and the first and second function actuators, coupling either the first control valve system with the second function actuator to control the movement of the second function actuator to effect the steering of the second ground engaging member by the first control valve system or the second control valve system with the first function actuator to control the movement of the first function actuator to effect the steering of the first ground engaging member by the second control valve system.

In any of the implementations, the method further includes responsive to receiving the re-route signal by a routing valve system operatively coupled with the electronic control system, either controlling the steering of both the first and second ground engaging members by the first control valve system or controlling the steering of both the first and second ground engaging members by the second control valve system.

In any of the implementations, the method further includes obtaining the control valve fault signal by receiving the control valve fault signal by the electronic control system from an ECM of the work vehicle operatively coupled with the electronic control system, generating the re-route signal by the electronic control system based on receiving the control valve fault signal from the ECM of the work vehicle.

In any of the implementations, the method further includes obtaining the control valve fault signal by the electronic control system as a first control valve fault signal representative of a first fault condition detected in the first control valve system, generating the re-route signal by the electronic control system as a first re-route signal based on the obtained first control valve fault signal, and coupling the second control valve system with the first function actuator by the routing valve system responsive to receiving the first re-route signal from the electronic control system to control the movement of the first function actuator to effect the steering of the first ground engaging member by the second control valve system.

In any of the implementations, the method further includes obtaining the first control valve fault signal by receiving the first control valve fault signal by the electronic control system from an ECM of the work vehicle operatively coupled with the electronic control system, and generating the first re-route signal by the electronic control system based on the electronic control system receiving the first control valve fault signal from the ECM of the work vehicle.

In any of the implementations, the method further includes obtaining the control valve fault signal by the electronic control system as a second control valve fault signal representative of a second fault condition detected in the second control valve system, generating the re-route signal by the electronic control system as a second re-route signal based on the obtained second control valve fault signal, and coupling the first control valve system with the second function actuator by the routing valve system responsive to receiving the second re-route signal from the electronic control system to control the movement of the second function actuator to effect the steering of the second ground engaging member by the first control valve system.

In any of the implementations, the method further incudes obtaining the second control valve fault signal by receiving the second control valve fault signal by the electronic control system from an ECM of the work vehicle operatively coupled with the electronic control system, and generating the second re-route signal by the electronic control system based on receiving the second control valve fault signal from the ECM of the work vehicle.

In any of the implementations, the method further includes generating a set of first valve system functionality signals by a first set of control valve system sensors operatively coupled with the first control valve system and/or with the electronic control system, wherein the set of first valve system functionality signals are representative of an operational condition of the first control valve system, generating a set of second valve system functionality signals by a second set of control valve system sensors operatively coupled with the second control valve system and/or with the electronic control system, wherein the set of second valve system functionality signals are representative of an operational condition of the second control valve system, receiving by the electronic control system the set of first valve system functionality signals, receiving by the electronic control system the set of second valve system functionality signals, obtaining by the electronic control system the control valve fault signal by generating the control valve fault signal based on the received sets of the first and second valve system functionality signals, and generating the re-route signal by the electronic control system based on the generated control valve fault signal.

In any of the implementations, the method further includes transmitting by the electronic control system a steering alert signal representative of the generated control valve fault signal to an ECM of the work vehicle operatively coupled with the electronic control system.

In any of the implementations, the method further includes responsive to receiving by the routing valve system the re-route signal from the electronic control system, either coupling the first control valve system with the second function actuator by a direct acting valve of the routing valve system to control the movement of the second function actuator to effect the steering of the second ground engaging member by the first control valve system or coupling the second control valve system with the first function actuator by the direct acting valve of the routing valve system to control the movement of the first function actuator to effect the steering of the first ground engaging member by the second control valve system.

In any of the implementations, the method further includes responsive to receiving by the routing valve system the re-route signal from the electronic control system, either coupling the first control valve system with the second function actuator by a pilot acting valve of the routing valve system to control the movement of the second function actuator to effect the steering of the second ground engaging member by the first control valve system or coupling the second control valve system with the first function actuator by the pilot acting valve of the routing valve system to control the movement of the first function actuator to effect the steering of the first ground engaging member by the second control valve system.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

FIGURE 1 is a schematic diagram of a by-wire electrohydraulic steering system in accordance with an example implementation.
FIGURE 2 is a schematic diagram of a hydraulic circuit for a control valve system in accordance with an example implementation.
FIGURE 3A is a schematic diagram of a routing valve system in accordance with an implementation of the by-wire electrohydraulic steering system of Fig. 1 in accordance with an example implementation.
FIGURE 3B is a schematic diagram of a routing valve system in accordance with an implementation of the by-wire electrohydraulic steering system of Fig. 1 in accordance with an example implementation.
FIGURE 3C is a schematic diagram of a routing valve system in accordance with an implementation of the by-wire electrohydraulic steering system of Fig. 1 in accordance with an example implementation.
FIGURE 3D is a schematic diagram of a routing valve system in accordance with an implementation of the by-wire electrohydraulic steering system of Fig. 1 in accordance with an example implementation.
FIGURE 4A is a schematic diagram of a hydraulic circuit for a control valve system in accordance with an example implementation.
FIGURE 4B is a schematic diagram of a hydraulic circuit for a control valve system in accordance with an example implementation.
FIGURE 5 is a schematic diagram of an example computer system that can be used to provide computational functionalities associated with methods and systems described herein.
FIGURE 6 is a flow diagram illustrating one example implementation of a method for performing steer-by-wire control of electrohydraulic systems in accordance with an example implementation.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

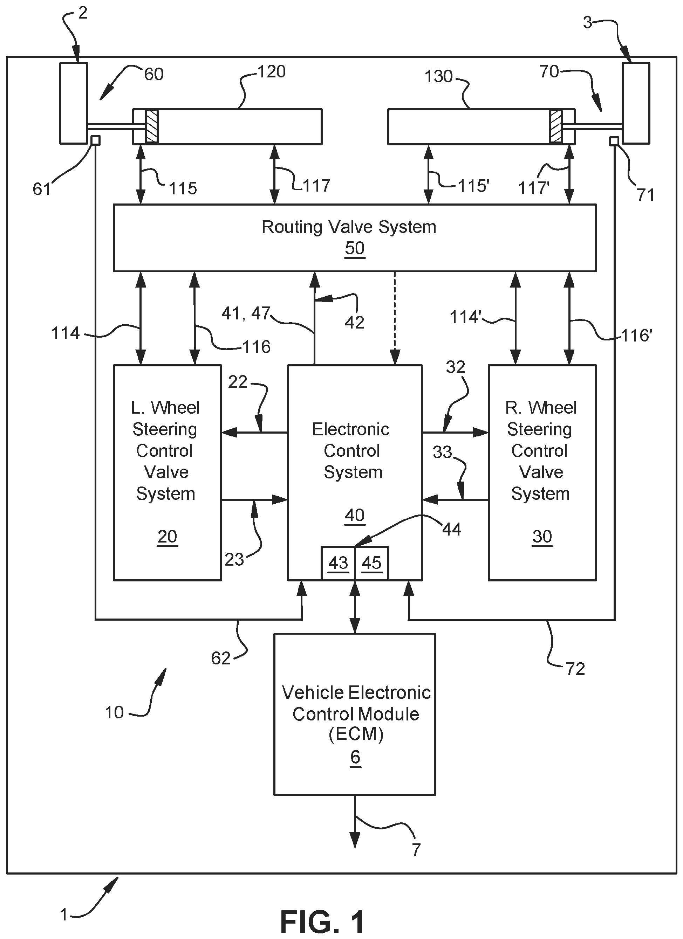

Referring to Fig. 1, a by-wire electrohydraulic steering system 10 in accordance with an implementation is illustrated. The by-wire electrohydraulic steering system 10 is shown for ease of illustration in an application that includes a work vehicle 1 having first and second ground engaging members 2, 3. The work vehicle further includes a first function actuator 120 coupled with the first ground engaging member 2 to effect and/or otherwise control the steering of the first ground engaging member 2. Similarly, the work vehicle also includes a second function actuator 130 coupled with the second ground engaging member 3 to effect and/or otherwise control the steering of the second ground engaging member 3. In the implementation illustrated, each of the first and second ground engaging members 2, 3 may be separately and/or independently steered by controlled movement of the first and second function actuators 120, 130. In the implementation illustrated, the first ground engaging member 2 may be separately and/or independently steered by controlled movement of the first function actuator 120 by control valve system 20 of the subject by-wire electrohydraulic steering system 10. In the implementation illustrated, the second ground engaging member 3 may be separately and/or independently steered by controlled movement of the second function actuator 130 by control valve system 30 of the subject by-wire electrohydraulic steering system 10.

In this regard, the by-wire electrohydraulic steering system 10 of the implementation illustrated includes a first control valve system 20 responsive to a first set of one or more control signals 22 to control movement of the first function actuator 120 coupled with the first ground engaging member 2 of the work vehicle 1 to effect steering of the first ground engaging member 2. In this way, the first control valve system 20 is operable to effect steering of the first ground engaging member 2 via the first function actuator 120 based on the first set of one or more control signals 22.

Similarly, the by-wire electrohydraulic steering system 10 of the implementation illustrated includes a second control valve system 30 responsive to a second set of one or more control signals 32 to control movement of the second function actuator 130 coupled with the second ground engaging member 3 of the work vehicle 1 to effect steering of the second ground engaging member 3. In this way, the second control valve system 30 is operable to effect steering of the second ground engaging member 3 via the second function actuator 130 based on the second set of one or more control signals 32.

In the example implementation, the first and second ground engaging members 2, 3 are steered and/or otherwise controlled separately. In the example implementation, the first and second ground engaging members 2, 3 are steered and/or otherwise controlled separately by control of the first and second sets of one or more control signals 22, 32 by an electronic control system 40 operatively coupled with the first and second control valve systems 20, 30.

As shown, the electronic control system 40 is operatively coupled with the first and second control valve systems 20, 30, wherein the electronic control system 40 is operable to generate the first and second sets of one or more control signals 22, 32 for controlling the steering of the first and second ground engaging members 2, 3. The electronic control system 40 controls the steering of the first and second ground engaging members 2, 3 by generating the first and second sets of one or more control signals 22, 32 thereby effecting movement in the first and second function actuators 120, 130 respectively coupled with the first and second ground engaging member 2, 3 of the work vehicle 1. In accordance with an example implementation, the electronic control system 40 is operative to generate a re-route signal 42 based on an obtained control valve fault signal 44. As will be described in greater detail below, in accordance with an example implementation, the control valve fault signal 44 may be obtained from one or more electronic circuits, busses, or the like of the associated work vehicle 1. In accordance with another example implementation, the control valve fault signal 44 may be determined by the by-wire electrohydraulic steering system 10 of the subject disclosure independently without intervention by or from the associated work vehicle 1. In accordance with another example implementation, the control valve fault signal 44 may be a signal received from an operator of the associated work vehicle 1.

In some circumstances such as in cases where a fault condition is detected, determined and/or otherwise obtained in the first control valve system 20 it is desirable to couple the second control valve system 30 with the first function actuator 120 to control the movement of the first function actuator 120 to effect the steering of the first ground engaging member 2 by the second control valve system 30. In accordance with an implementation, the by-wire electrohydraulic steering system 10 is operable to couple the second control valve system 30 with the first function actuator 120 based on a fault condition being detected, determined and/or otherwise obtained in the first control valve system 20 to control the movement of the first function actuator 120 to effect the steering of the first ground engaging member 2 by the second control valve system 30.

In addition and in some further circumstances such as in cases where a fault condition is detected, determined and/or otherwise obtained in the second control valve system 30, it is desirable to couple the first control valve system 20 with the second function actuator 130 to control the movement of the second function actuator 130 to effect the steering of the second ground engaging member 3 by the first control valve system 20. In accordance with an implementation, the by-wire electrohydraulic steering system 10 is operable to couple the first control valve system 20 with the second function actuator 130 based on a fault condition being detected, determined and/or otherwise obtained in the second control valve system 30 to control the movement of the second function actuator 130 to effect the steering of the second ground engaging member 3 by the first control valve system 20.

In addition and in some further circumstances such as in cases where a fault condition is detected, determined and/or otherwise obtained in the first control valve system 20 it is desirable to deactivate or otherwise render the first control valve system 20 inert, non-functional, or the like thereby removing the first control valve system 20 from control of the first function actuator 120 and to couple the second control valve system 30 with the first function actuator 120 to control the movement of both the first and second function actuators 120, 130 to effect the steering of both the first and second ground engaging members 2, 3 by the second control valve system 30. The by-wire electrohydraulic steering system 10 of the implementation illustrated is operable to deactivate or otherwise render the first control valve system 20 inert, non-functional, or the like based on a fault condition being detected, determined and/or otherwise obtained in the first control valve system 20, thereby removing the first control valve system 20 from control of the first function actuator 120 and to couple the second control valve system 30 with the first function actuator 120 to control the movement of both the first and second function actuators 120, 130 to effect the steering of both the first and second ground engaging members 2, 3 by the second control valve system 30. In this regard, the solenoids 148, 150 of the valves 140, 142 may be controlled by the electronic control system 40 via one or more valve position control signal lines 22 (Fig. 1) to deactivate or otherwise render the first control valve system 20 inert, non-functional, or the like based on a fault condition being detected.

In addition and in some further circumstances such as in cases where a fault condition is detected, determined and/or otherwise obtained in the second control valve system 30, it is desirable to deactivate or otherwise render the second control valve system 30 inert, non-functional, or the like thereby removing the second control valve system 30 from control of the second function actuator 130 and to couple the first control valve system 20 with both the first and second function actuators 120, 130 to control the movement of both the first and second function actuators 120, 130 to effect the steering of both the first and second ground engaging members 2, 3 by the first control valve system 20. The by-wire electrohydraulic steering system 10 of the implementation illustrated is operable to deactivate or otherwise render the second control valve system 30 inert, non-functional, or the like based on a fault condition being detected, determined and/or otherwise obtained in the second control valve system 30, thereby removing the second control valve system 30 from control of the second function actuator 130 and to couple the first control valve system 20 with both the first and second function actuators 120, 130 to control the movement of both the first and second function actuators 120, 130 to effect the steering of both the first and second ground engaging members 2, 3 by the first control valve system 20. In this regard, the solenoids 148', 150' of the valves 140', 142' of the second control valve system 30 may be controlled by the electronic control system 40 via one or more valve position control signal lines 32 (Fig. 1) to deactivate or otherwise render the second control valve system 30 inert, non-functional, or the like based on a fault condition being detected.

Regarding the above and with continued reference to Fig. 1, the by-wire electrohydraulic steering system 10 of the implementation illustrated further includes a routing valve system 50 operatively coupled with the electronic control system 40, the first and second control valve systems 20, 30, and the first and second function actuators 120, 130. In accordance with the implementation shown, the routing valve system 50 is responsive to receiving the re-route signal 42 from the electronic control system 40 to either couple the first control valve system 20 with the second function actuator 130 to control the movement of the second function actuator 130 to effect the steering of the second ground engaging member 3 by the first control valve system 20, or couple the second control valve system 30 with the first function actuator 120 to control the movement of the first function actuator 120 to effect the steering of the first ground engaging 2 member by the second control valve system 30.

In accordance with the implementation shown and in particular, the routing valve system 50 is responsive to receiving the re-route signal 42 from the electronic control system 40 to either couple the first control valve system 20 with both the first and second function actuators 120, 130 to control the movement of both the first and second function actuators 120, 130 to effect the steering of both the first and second ground engaging members 2, 3 by the first control valve system 20, or couple the second control valve system 30 with both the first and second function actuators 120, 130 to control the movement of both the first and second function actuators 120, 130 to effect the steering of both the first and second ground engaging members 2, 3 by the second control valve system 30.

In the example implementation illustrated, in a physical and/or logical absence of an affirmation of the re-route signal 42, the routing valve system 50 operates to couple the first control valve system 20 with the first function actuator 120 to control the movement of the first function actuator 120 to effect the steering of the first ground engaging member 2 by the first control valve system 20, and to couple the second control valve system 30 with the second function actuator 130 to control the movement of the second function actuator 130 to effect the steering of the second ground engaging member 3 by the second control valve system 30. It is to be appreciated that the re-route signal 42 may have a "fail safe" logic whereby, upon a failure of the electronic control circuit 40, the movement of the first function actuator 120 is controlled by the first control valve system 20 for controlling movement and steering of the first ground engaging member 2 and, similarly, upon the failure of the electronic control circuit 40, the movement of the second function actuator 130 is controlled by the second control valve system 30 for controlling movement and steering of the second ground engaging member 3.

In accordance with an implementation the routing valve system 50 of the by-wire electrohydraulic steering system 10 is responsive to the physical and/or logical condition of the re-route signal 42 from the electronic control system 40 to either control the steering of both the first and second ground engaging members 2, 3 by the first control valve system 20, control the steering of both the first and second ground engaging members 2, 3 by the second control valve system 30, or control the steering of the first and second ground engaging members 2, 3 independently and/or separately by the first and second control valve systems 20, 30, respectively.

As described above, the control valve fault signal 44 may be determined internally within the electronic control system 40, acquired, or obtained from one or more electronic circuits, busses, or the like of the associated work vehicle 1. In this regard the electronic control system 40 is operatively coupled in an example implementation with an electronic control module (ECM) 6 of the work vehicle 1. In this way the electronic control system 40 is operative to obtain the control valve fault signal 44 by receiving the control valve fault signal 44 from the ECM 6 of the work vehicle 1. The electronic control system 40 may then generate the re-route signal 42 based on receiving the control valve fault signal 44 from the ECM 6 of the work vehicle 1.

As further described above, the control valve fault signal 44 may be determined by the by-wire electrohydraulic steering system 10 of the subject disclosure without intervention by or from the associated work vehicle. In this regard the electronic control system 40 of the example implementation is operative to obtain the control valve fault signal 44 as a first control valve fault signal 43 representative of a first fault condition detected in the first control valve system 20, and to generate the re-route signal 42 as a first re-route signal 41 based on the obtained first control valve fault signal 43. Based on this, the routing valve system 50 is responsive to receiving the first re-route signal 41 from the electronic control system 40 to couple the second control valve system 30 with the first function actuator 120 to control the movement of the first function actuator 120 to effect the steering of the first ground engaging member 2 by the second control valve system 30.

In addition to the above, the control valve fault signal 44 may be obtained from one or more electronic circuits, busses, or the like of the associated work vehicle 1, wherein the one or more electronic circuits, busses, or the like of the associated work vehicle 1 may determine a fault condition in either of the first and/or second control valve systems separately and/or individually. In the illustrated example implementation, the electronic control system 40 is operatively coupled with an electronic control module (ECM) 6 of the work vehicle 1 and is further operative to obtain the first control valve fault signal 43 by receiving the first control valve fault signal 43 from the ECM 6 of the work vehicle 1.

The electronic control system 40 is operative to generate the first re-route signal 41 based on receiving the first control valve fault signal 43 from the ECM 6 of the work vehicle 1.

In addition to the above, the electronic control system 40 of the example implementation is operative to obtain the control valve fault signal 44 as a second control valve fault signal 45 representative of a second fault condition detected in the second control valve system 20, and to generate the re-route signal 42 as a second re-route signal 47 based on the obtained second control valve fault signal 45. Based on this, the routing valve system 50 is responsive to receiving the second re-route signal 47 from the electronic control system 40 to couple the first control valve system 20 with the second function actuator 130 to control the movement of the second function actuator 130 to effect the steering of the second ground engaging member 3 by the first control valve system 20.

In addition to the above, the control valve fault signal 44 may be obtained from one or more electronic circuits, busses, or the like of the associated work vehicle 1, wherein the one or more electronic circuits, busses, or the like of the associated work vehicle 1 may determine a fault condition in either of the first and/or second control valve systems separately and/or individually. In the illustrated example implementation, the electronic control system 40 is operatively coupled with an electronic control module (ECM) 6 of the work vehicle 1 and is further operative to obtain the second control valve fault signal 45 by receiving the second control valve fault signal 45 from the ECM 6 of the work vehicle 1. The electronic control system 40 is operative to generate the second re-route signal 47 based on receiving the second control valve fault signal 45 from the ECM 6 of the work vehicle 1.

Various position sensors, pressure sensors, and/or other sensors are provided for generating signals that may be used in determining operational capabilities including for example fault conditions of the first and second control valve systems 20, 30. In this regard, the by-wire electrohydraulic steering system 10 of the example implementation includes a first set of control valve system sensors 60 operatively coupled with the first control valve system 20. The first set of control valve system sensors 60 may include any types of sensors for detecting the position and/or condition of the first function actuator 120 and/or of the first ground engaging member 2 and/or of any mechanisms associated with the connection between the first function actuator 120 and the first ground engaging member 2. The first set of control valve system sensors 60 may include a position sensor 61, for example, for sensing the position of the first ground engaging member 2 and/or the position of a mechanism associated with the connection between the first function actuator 120 and the first ground engaging member 2. The first set of control valve system sensors 60 are operative to generate a set of first valve system functionality signals 62 representative of an operational condition of the first control valve system 20.

In addition, the by-wire electrohydraulic steering system 10 of the example implementation further includes a second set of control valve system sensors 70 operatively coupled with the second control valve system 30. The second set of control valve system sensors 70 may include any types of sensors for detecting the position and/or condition of the second function actuator 130 and/or of the second ground engaging member 3 and/or of any mechanisms associated with the connection between the second function actuator 130 and the second ground engaging member 3. The second set of control valve system sensors 70 may include a position sensor 71, for example, for sensing the position of the second ground engaging member 3 and/or the position of a mechanism associated with the connection between the second function actuator 130 and the second ground engaging member 3. The second set of control valve system sensors 70 are operative to generate a set of second valve system functionality signals 72 representative of an operational condition of the second control valve system 30.

Having the sets of first and second valve system functionality signals 62, 72 generated by the sets of sensors 60, 70 and being representative of the operational conditions of the first and second control valve systems 20, 30, the electronic control system 40 is operative to receive the set of first valve system functionality signals 62, receive the set of second valve system functionality signals 72, and obtain or otherwise determine the control valve fault signal 44 by generating the control valve fault signal 44 based on the received sets of the first and second valve system functionality signals 62, 72. The electronic control system 40 is further operative to generate the re-route signal 42 based on the generated control valve fault signal 44.

It is to be appreciated that the control valve fault signal 44 may be used to provide the operator of the associated work vehicle 1 with an indication of a detected improper or out of tolerance operation of either of the first or second control valve systems 20, 30. This information may be useful to the operator prior to performing certain turning operations of the work vehicle where the criticality of independent wheel steering may (or may not) be important to efficient vehicle operation or for crop damage considerations.

As described above, the electronic control system 40 may be operatively coupled with an electronic control module (ECM) 6 of the work vehicle 1. In accordance with an implementation the electronic control system 40 is operative to transmit a steering alert signal 7 representative of the generated control valve fault signal 44 to the ECM 6 of the work vehicle 1. In this way the fault detection relative to the steering control valve system(s) may be reported to the operator of the work vehicle.

In accordance with the example implementations herein, redundancy is advantageously provided in steer-by-wire electrohydraulic systems in work vehicles having independently steerable ground engaging members so that the steering control function of each wheel can be maintained despite the occurrence of one or more failures in the separate electrohydraulic systems that control the steering of each ground engaging member. For this, dual steer-by-wire electrohydraulic systems are provided for each ground engaging member to operate in parallel and switch over operational steering control of each ground engaging member from one to the other redundant electrohydraulic system whenever a failure is detected. The hydraulic circuits of the first and second control valve systems 20, 30 may be duplications, input sensor information can be shared between redundant system channels, and redundant time-deterministic communication busses may be provided.

In the implementations herein, only a single function actuator is used per side of the work vehicle (for a total of two 2 functional actuators per steerable axle)wherein based on an obtained or otherwise determined or detected signal representative of a fault condition in the left front wheel steering control valve system, controlling steering of both the left and right front ground engaging members of the vehicle using the still functional right front wheel steering control valve system, and wherein based on an obtained or otherwise determined or detected signal representative of a fault condition in the left front wheel steering control valve system, controlling steering of both the left and right front ground engaging members of the vehicle using the still functional right front wheel steering control valve system. This avoids the need to provide duplicative redundant functional actuators on each side of the work vehicle (for a total of four 4 functional actuators per steerable axle). This avoids the need for an extra two (2) functional actuators on each side of the work vehicle (per steerable axle) while still yet providing the desirable steering redundancy.

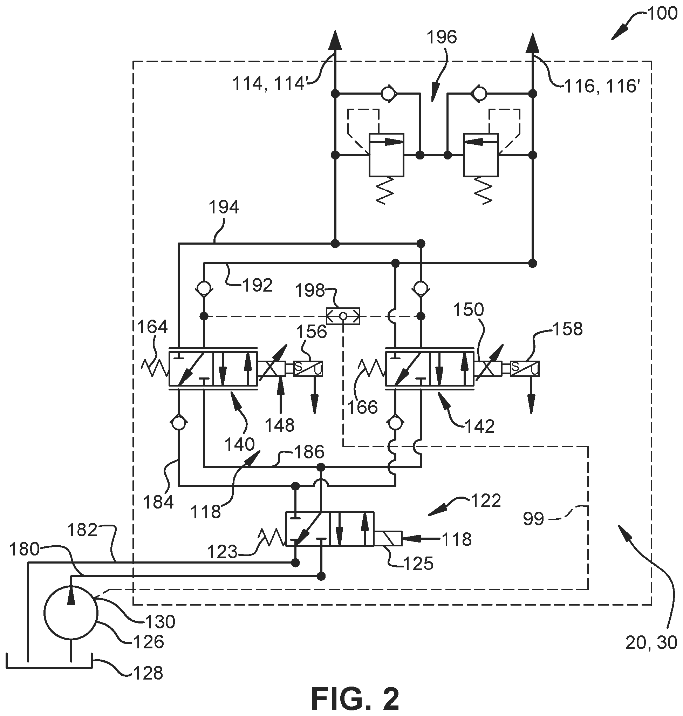

Fig. 2 is a schematic diagram of a hydraulic circuit 100 for a control valve system 20, 30 in accordance with an example implementation. The steer-by-wire electronic system or circuit 10 (Fig. 1) is operatively coupled with a bi-directional hydraulic steering cylinder or function actuator 120, 130 connected to vehicle components or steerable wheels (not shown) and with left and right inlet ports 114 and 116. The hydraulic circuit 100 includes a solenoid operated directional control valve unit 118, a shut-off valve 122, a pump 126 and a reservoir 128. Pump 126 includes a load sense port 130. Directional control valve unit 118 and shut-off valve 122 are connected and controlled by the electronic control circuit 40 shown in Fig. 1.

Shut off valve 122 includes a spring 123 and a solenoid 125.

Directional control valve unit 118 includes first and second solenoid operated 4-way, 2-position proportional valves 140 and 142. Each solenoid operated 4-way, 2-position proportional valve 140 and 142 includes a solenoid 148, 150, a valve position sensor 156, 158, and a spring 164, 166. The valves are preferably small low-cost cartridge type valves. The valve position sensors 156, 158 may be commercially available LVDT (linear variable differential transformer) type spool position sensors, or a suitable similar position sensor. Signals from the valve position sensors 156, 158 may be communicated to the electronic control system 40 via one or more valve position feedback signal lines 23, 33 (Fig. 1). Similarly, the solenoids 148, 150 of the valves 140, 142 may be controlled by the electronic control system 40 via one or more valve position control signal lines 22, 32 (Fig. 1).

Lines 180 and 182 connect the pump 126 and reservoir 128, respectively, to an inlet port of shut-off valve 122. Line 184 connects a first outlet of shut-off valve 122 to inlets of valves 140 and 142. Line 186 connects a second outlet of shut-off valve 122 to inlets of valves 140 and 142. A check valve in line 184 permits one-way fluid flow therethrough to shut-off valve 122.

Line 192 connects right actuator inlet 116 to an outlet of each of valves 140, 142. Line 194 connects left actuator inlet 114 to an outlet of each of valves 140,142. A check valve in line 192 permits one-way fluid flow therethrough from valve 140 to actuator right inlet 116. A check valve in line 194 permits one-way fluid flow therethrough from valve 142 to actuator left inlet 114.

A relief and check valve circuit 196 operates in a known manner to limit pressure in the actuators 120, 130 (Fig. 1) and in lines 192 and 194, such as when a steerable wheel (not shown) strikes an object, such a stump. A shuttle check valve 198 communicates the highest pressure in the branches of lines 192 and 194 to the line sense port 130 of pump 126 via load sense line 99.

In an alternate embodiment (not shown) the valve unit 140 may include only a single 4-way, 3-position, spring-centered, dual solenoid operated valve.

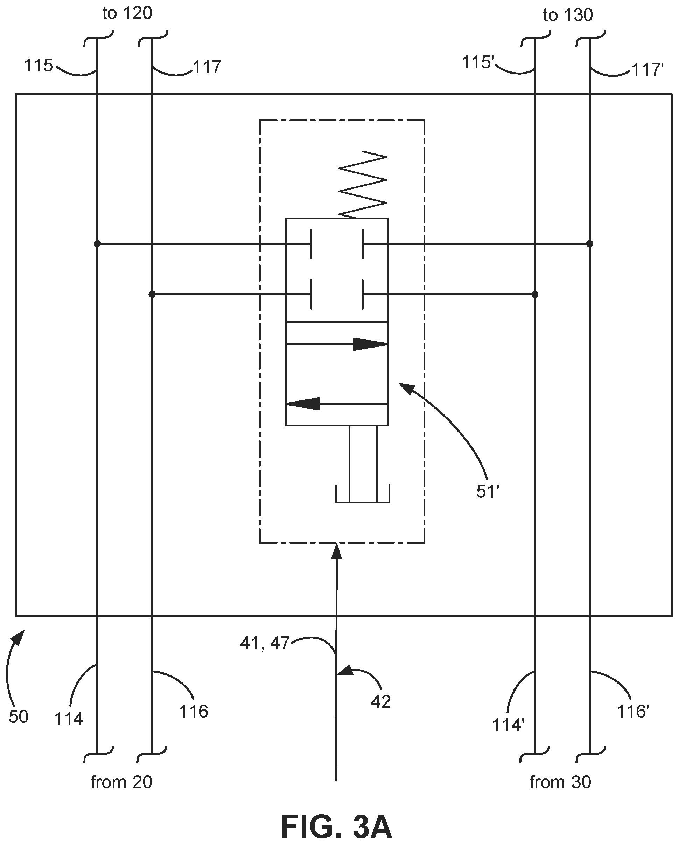

Fig. 3A is a schematic diagram of a routing valve system 50 in accordance with an implementation of the by-wire electrohydraulic steering system 10 of Fig. 1 in accordance with an example implementation.

In accordance with an example implementation the routing valve system 50 comprises a valve 50' responsive to receiving the re-route signal 42 from the electronic control system 40 to couple the first control valve system 20 with the second function actuator 130 to control the movement of the second function actuator 130 to effect the steering of the second ground engaging member 3 by the first control valve system 20, or couple the second control valve system 30 with the first function actuator 120 to control the movement of the first function actuator 120 to effect the steering of the first ground engaging member 2 by the second control valve system 30.

In accordance with a the example implementation, the valve 50' of the routing valve system 50 may comprise a direct acting valve responsive to receiving the re-route signal 42 from the electronic control system 40 to couple the first control valve system 20 with the second function actuator 130 to control the movement of the second function actuator 130 to effect the steering of the second ground engaging member 3 by the first control valve system 20, or couple the second control valve system 30 with the first function actuator 120 to control the movement of the first function actuator 120 to effect the steering of the first ground engaging member 2 by the second control valve system 30.

In a first position the valve 51' is closed between the left and right actuator ports 114, 116 from the left steering control system 20 and the piston side input 115' and the rod side input 117' of the second function actuator 130. Similarly the valve 51' in the first position is closed between the left and right actuator ports 114', 116' from the right steering control system 30 and the piston side input 117 and the rod side input 115 of the first function actuator 120.

In a second position the valve 51' is open between the left and right actuator ports 114, 116 from the left steering control system 20 and the piston side input 115' and the rod side input 117' of the second function actuator 130, thereby controlling both the first and second function actuators 120, 130 using the left steering control system 20, based on a failure or other error in the right steering control system 30. The signal to the shut-off valve 122' (not shown) is removed upon the detection of failure or other error in the left steering control system 30. Similarly the valve 51' in the second position is open between the left and right actuator ports 114', 116' from the right steering control system 30 and the piston side input 117 and the rod side input 115 of the first function actuator 120, thereby controlling both the first and second function actuators 120, 130 using the right steering control system 30, based on a failure or other error in the left steering control system 20. The signal to the shut-off valve 122 is removed upon the detection of failure or other error in the left steering control system 20.

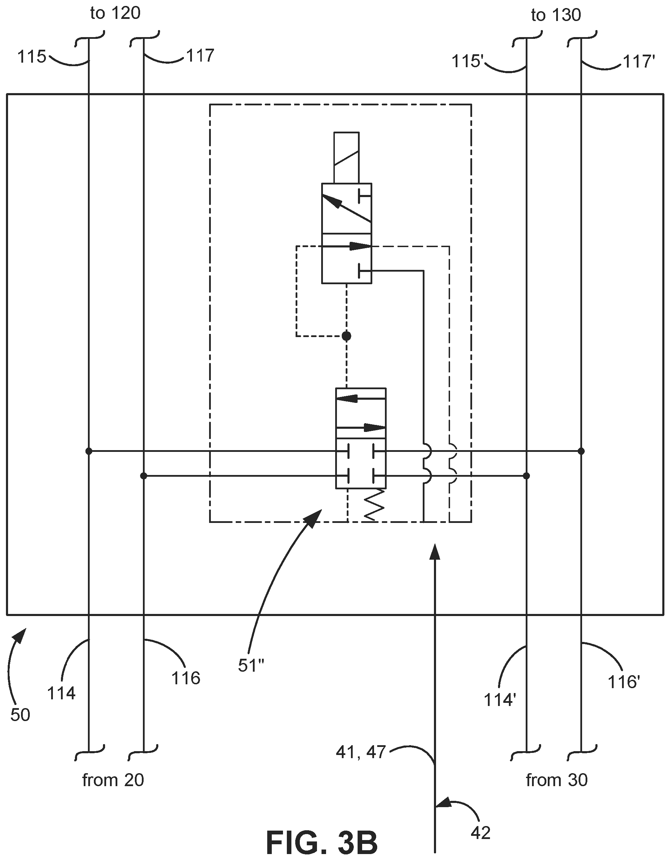

Fig. 3B is a schematic diagram of a routing valve system 50 in accordance with an implementation of the by-wire electrohydraulic steering system 10 of Fig. 1 in accordance with an example implementation. In Fig. 3B hydraulic lines that are illustrated in solid lines represent high pressure lines, hydraulic lines that are illustrated as long dashed lines represent low/return pressure lines, hydraulic lines that are illustrated as short dashed lines represent pilot signal lines.

In accordance with an example implementation the routing valve system 50 comprises a pilot acting valve 50" responsive to receiving the re-route signal 42 from the electronic control system 40 to couple the first control valve system 20 with the second function actuator 130 to control the movement of the second function actuator 130 to effect the steering of the second ground engaging member 3 by the first control valve system 20, or couple the second control valve system 30 with the first function actuator 120 to control the movement of the first function actuator 120 to effect the steering of the first ground engaging member 2 by the second control valve system 30.

In accordance an example implementation the routing valve system 50 comprises a pilot acting valve 50" responsive to receiving the re-route signal 42 from the electronic control system 40 to couple the first control valve system 20 with the second function actuator 130 to control the movement of the second function actuator 130 to effect the steering of the second ground engaging member 3 by the first control valve system 20, or couple the second control valve system 30 with the first function actuator 120 to control the movement of the first function actuator 120 to effect the steering of the first ground engaging member 2 by the second control valve system 30.

In a first position the valve 51" is closed between the left and right actuator ports 114, 116 from the left steering control system 20 and the piston side input 115' and the rod side input 117' of the second function actuator 130. Similarly the valve 51" in the first position is closed between the left and right actuator ports 114', 116' from the right steering control system 30 and the piston side input 115 and the rod side input 117 of the first function actuator 120.

In a second position the valve 51" is open between the left and right actuator ports 114, 116 from the left steering control system 20 and the piston side input 115' and the rod side input 117' of the second function actuator 130, thereby controlling both the first and second function actuators 120, 130 using the left steering control system 20, based on a failure or other error in the right steering control system 30. The signal to the shut-off valve 122' (not shown) is removed upon the detection of failure or other error in the left steering control system 30. Similarly the valve 51" in the second position is open between the left and right actuator ports 114', 116' from the right steering control system 30 and the piston side input 117 and the rod side input 115 of the first function actuator 120, thereby controlling both the first and second function actuators 120, 130 using the right steering control system 30, based on a failure or other error in the left steering control system 20. The signal to the shut-off valve 122 is removed upon the detection of failure or other error in the left steering control system 20.

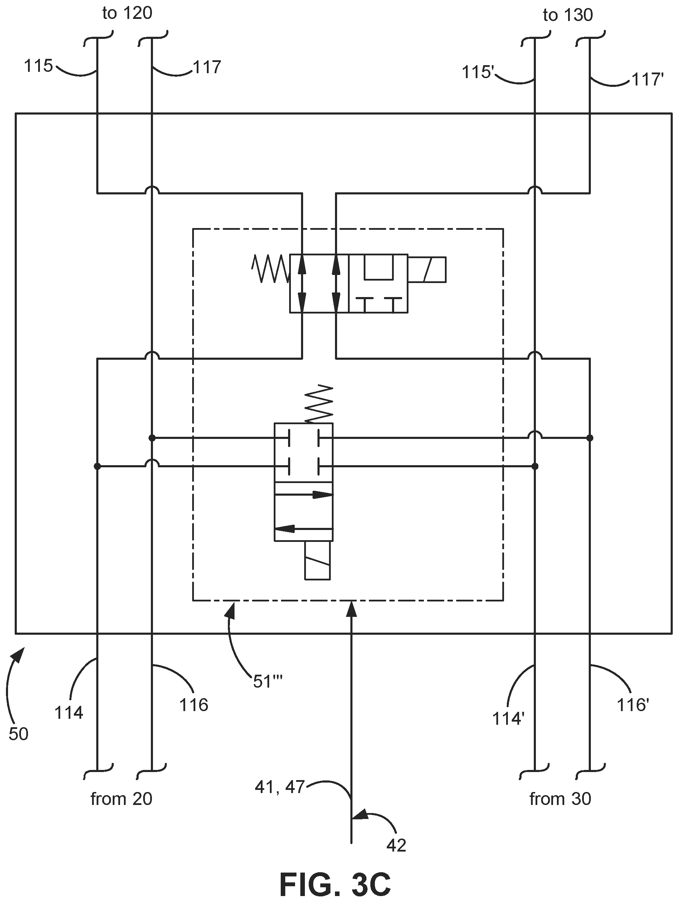

Fig. 3C is a schematic diagram of a routing valve system 50 in accordance with an implementation of the by-wire electrohydraulic steering system 10 of Fig. 1 in accordance with a further example implementation.

In accordance with an example implementation the routing valve system 50 comprises a pair 50‴ of 2-position 4-way valves responsive to receiving the re-route signal 42 from the electronic control system 40 to couple the first control valve system 20 with the second function actuator 130 to control the movement of the second function actuator 130 to effect the steering of the second ground engaging member 3 by the first control valve system 20, or couple the second control valve system 30 with the first function actuator 120 to control the movement of the first function actuator 120 to effect the steering of the first ground engaging member 2 by the second control valve system 30.

Each of the 2-position 4-way valves of valve pair 50‴ is responsive to receiving the re-route signal from the electronic control system to couple the first control valve system 20 with the first and second function actuators 120, 130 to control the movement of the first and second function actuators 120, 130 to effect the steering of the first and second ground engaging members 2, 3 in mutual phase synchronization with each other by the first control valve system 20, or couple the second control valve system 30 with the first and second function actuators 120, 130 to control the movement of the first and second function actuators 120, 130 to effect the steering of the first and second ground engaging members 2, 3 in mutual phase with each other by the second control valve system 30.

As shown, a first 2-position 4-way valve of valve pair 50‴ is responsive to receiving the re-route signal 42 from the electronic control system 40 to essentially couple one or the other of the first and second control valve systems 20, 30 with both of the first and second function actuators 120, 130, wherein the respective other one of the first and second control valve systems 20, 30 is decommissioned or otherwise removed from being active in the hydraulic circuit by control of the appropriate shut off valve 122 (Fig. 2) by the electronic control system 40. Also as shown, a second 2-position 4-way valve of valve pair 50‴ is responsive to also similarly receiving the re-route signal 42 from the electronic control system 40 to couple the rod side input 115 of the first function actuator 120 with the piston side input 117' of the second actuator 130. In this way, the first and second ground engaging members 2, 3, are held in mutual phase synchronization with each other by the operative controlling by the first or second control valve system 20, 30. It is to be appreciated that the first and second ground engaging members 2, 3, are held in the mutual phase synchronization with each other by the operative controlling by the first or second control valve system 20, 30 for steering in both left and right directions of the work vehicle 1.

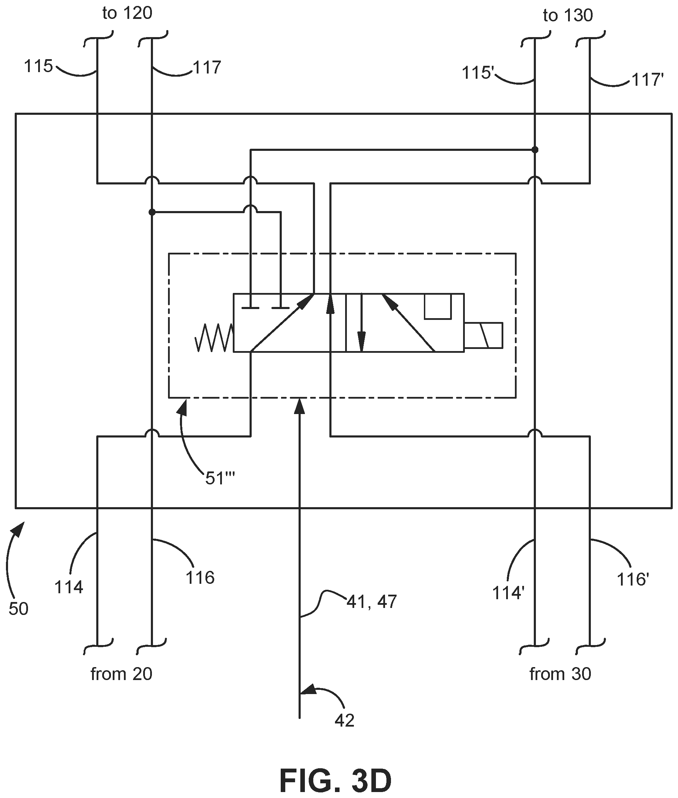

Fig. 3D is a schematic diagram of a routing valve system 50 in accordance with an implementation of the by-wire electrohydraulic steering system 10 of Fig. 1 in accordance with a further example implementation.

In accordance with an example implementation the routing valve system 50 comprises a 2-position 6-way valve 50ʺʺ responsive to receiving the re-route signal 42 from the electronic control system 40 to couple the first control valve system 20 with the second function actuator 130 to control the movement of the second function actuator 130 to effect the steering of the second ground engaging member 3 by the first control valve system 20, or couple the second control valve system 30 with the first function actuator 120 to control the movement of the first function actuator 120 to effect the steering of the first ground engaging member 2 by the second control valve system 30.

The 2-position 6-way valve 50ʺʺ is responsive to receiving the re-route signal from the electronic control system to couple the first control valve system 20 with the first and second function actuators 120, 130 to control the movement of the first and second function actuators 120, 130 to effect the steering of the first and second ground engaging members 2, 3 in mutual phase synchronization with each other by the first control valve system 20, wherein the second control valve system 30 is decommissioned or otherwise removed from being active in the hydraulic circuit by control of the shut off valve 122 (Fig. 2) by the electronic control system 40, or couple the second control valve system 30 with the first and second function actuators 120, 130 to control the movement of the first and second function actuators 120, 130 to effect the steering of the first and second ground engaging members 2, 3 in mutual phase with each other by the second control valve system 30, wherein the first control valve system 20 is decommissioned or otherwise removed from being active in the hydraulic circuit by control of the shut off valve 122 (Fig. 2) by the electronic control system 40.

As shown, the 2-position 6-way valve 50ʺʺ is responsive to receiving the re-route signal 42 from the electronic control system 40 also to couple the rod side input 115 of the first function actuator 120 with the piston side input 117' of the second actuator 130. In this way, the first and second ground engaging members 2, 3, are held in mutual phase synchronization with each other by the operative controlling first or second control valve systems 20, 30. It is to be appreciated that the first and second ground engaging members 2, 3, are held in the mutual phase synchronization with each other by the operative controlling by the first or second control valve system 20, 30 for steering in both left and right directions of the work vehicle 1.

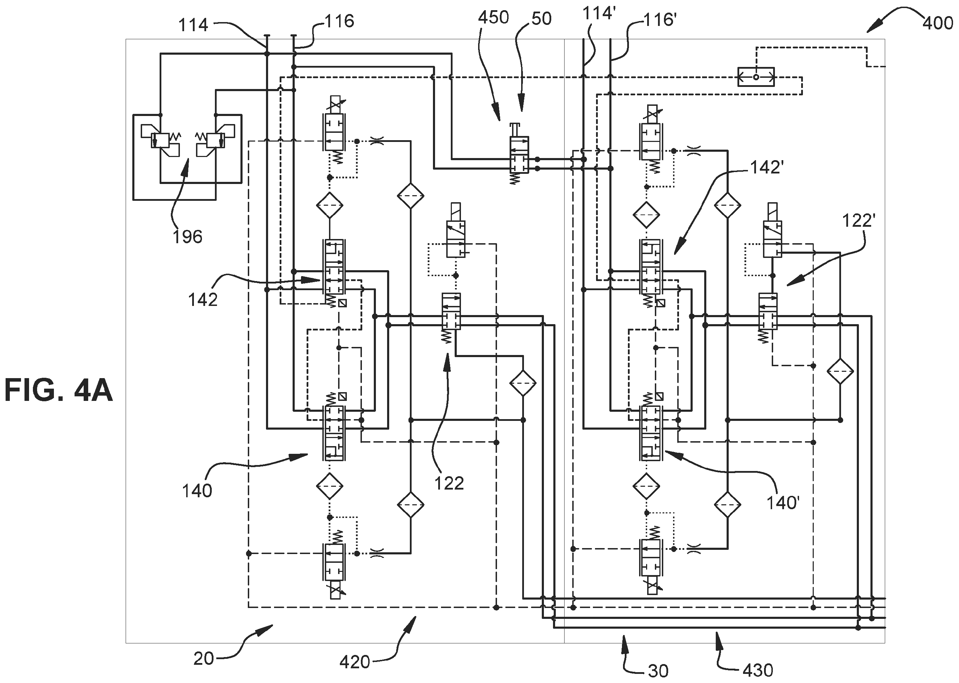

Fig. 4A is a schematic diagram of a hydraulic circuit 400 for a control valve system in accordance with an example implementation.

As shown, the hydraulic circuit 400 includes a first control valve system 420, a second control valve system 420, and a routing valve system 450 operatively coupled with the first and second control valve systems 420, 430.

In the implementation shown, the first control valve system 420 is responsive to a first set of control signals to control movement of a first function actuator coupled with a first ground engaging member of a work vehicle to effect steering of the first ground engaging member.

Also in the implementation shown, the second control valve system 430 is responsive to a second set of control signals to control movement of a second function actuator coupled with a second ground engaging member of the work vehicle to effect steering of the second ground engaging member. An electronic control system (not shown) is operatively coupled with the first and second control valve systems 420, 430 and is operable to generate the first and second sets of control signals for controlling the steering of the first and second ground engaging members. The electronic control system is operative to generate a re-route signal based on an obtained control valve fault signal. The routing valve system 450 is responsive to receiving the re-route signal from the electronic control system to couple the first control valve system 420 with the second function actuator to control the movement of the second function actuator to effect the steering of the second ground engaging member by the first control valve system 420, or couple the second control valve system 430 with the first function actuator to control the movement of the first function actuator to effect the steering of the first ground engaging member by the second control valve system 430.

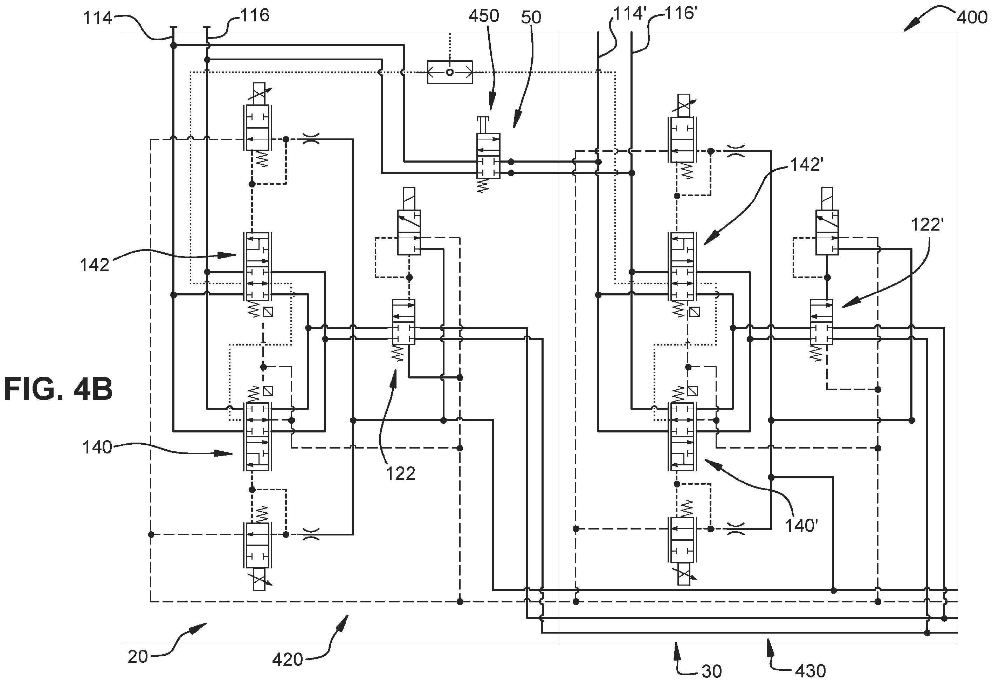

Fig. 4B is a schematic diagram of a hydraulic circuit 400 for a control valve system in accordance with an example implementation. In Fig. 4B hydraulic lines that are illustrated as solid lines represent high pressure lines, hydraulic lines that are illustrated as long dashed lines represent low/return pressure lines, hydraulic lines that are illustrated as short dashed lines represent pilot signal lines, and hydraulic lines that are illustrated as dotted lines represent optional load sensing pilot signal lines.

As shown, the hydraulic circuit 400 includes a first control valve system 420, a second control valve system 420, and a routing valve system 450 operatively coupled with the first and second control valve systems 420, 430.

In the implementation shown, the first control valve system 420 is responsive to a first set of control signals to control movement of a first function actuator coupled with a first ground engaging member of a work vehicle to effect steering of the first ground engaging member.

Also in the implementation shown, the second control valve system 430 is responsive to a second set of control signals to control movement of a second function actuator coupled with a second ground engaging member of the work vehicle to effect steering of the second ground engaging member. An electronic control system (not shown) is operatively coupled with the first and second control valve systems 420, 430 and is operable to generate the first and second sets of control signals for controlling the steering of the first and second ground engaging members. The electronic control system is operative to generate a re-route signal based on an obtained control valve fault signal. The routing valve system 450 is responsive to receiving the re-route signal from the electronic control system to couple the first control valve system 420 with the second function actuator to control the movement of the second function actuator to effect the steering of the second ground engaging member by the first control valve system 420, or couple the second control valve system 430 with the first function actuator to control the movement of the first function actuator to effect the steering of the first ground engaging member by the second control valve system 430.

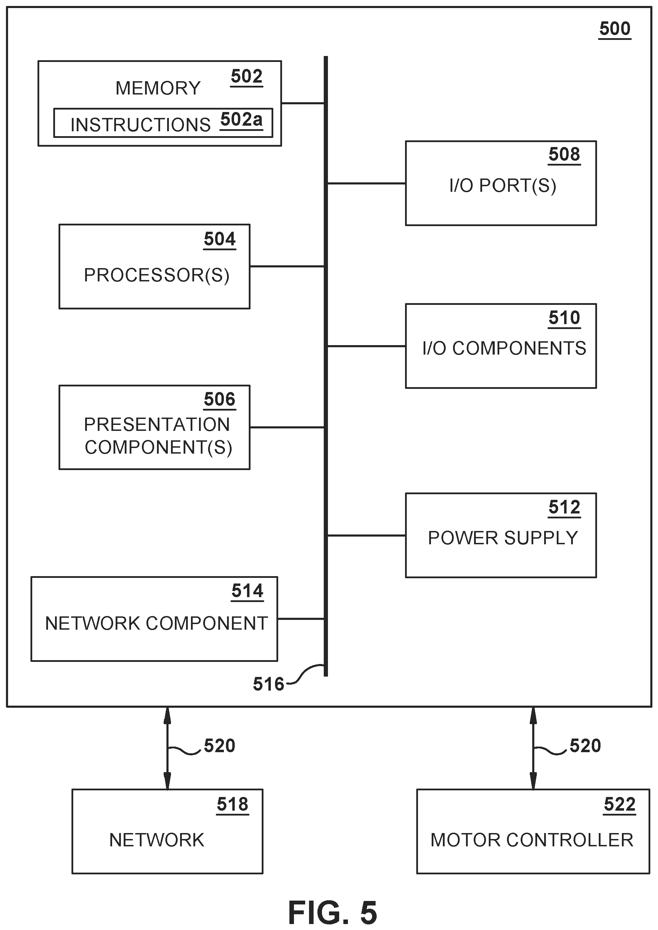

Fig. 5 is a schematic diagram of an example computer system 500 used to provide computational functionalities associated with described algorithms, methods, functions, processes, flows, and procedures described in the present disclosure, according to some implementations of the present disclosure. The illustrated computer 500 is intended to encompass any computing device such as a server, a desktop computer, a laptop/notebook computer, a wireless data port, a smart phone, a personal data assistant (PDA), a tablet computing device, or one or more processors within these devices, including physical instances, virtual instances, or both. The computer 500 can include input devices such as keypads, keyboards, and touch screens that can accept user information. Also, the computer 500 can include output devices that can convey information associated with the operation of the computer 500. The information can include digital data, visual data, audio information, or a combination of information. The information can be presented in a graphical user interface (UI) (or GUI).

The computer 500 can serve in a role as a client, a network component, a server, a database, a persistency, or components of a computer system for performing the subject matter described in the present disclosure. The illustrated computer 500 is communicably coupled with a network 518. In some implementations, one or more components of the computer 500 can be configured to operate within different environments, including cloud-computing-based environments, local environments, global environments, and combinations of environments.

At a high level, the computer 500 is an electronic computing device operable to receive, transmit, process, store, and manage data and information associated with the described subject matter. According to some implementations, the computer 500 can also include, or be communicably coupled with, an application server, an email server, a web server, a caching server, a streaming data server, or a combination of servers.

The computer 500 can receive requests over a network connection 520 from a client application (for example, executing on another computer 500). The computer 500 can respond to the received requests by processing the received requests using software applications. Requests can also be sent to the computer 500 from internal users (for example, from a command console), external (or third) parties, automated applications, entities, individuals, systems, and computers.

Each of the components of the computer 500 can communicate using a system bus 516. In some implementations, any or all of the components of the computer 500, including hardware or software components, can interface with each other or the interfaces 520 (or a combination of both), over the system bus 516. Interfaces can use an application programming interface (API), a service layer, or a combination of the API and service layer. The API can include specifications for routines, data structures, and object classes. The API can be either computer-language independent or dependent. The API can refer to a complete interface, a single function, or a set of APIs.

The service layer can provide software services to the computer 500 and other components (whether illustrated or not) that are communicably coupled to the computer 500. The functionality of the computer 500 can be accessible for all service consumers using this service layer. Software services, such as those provided by the service layer, can provide reusable, defined functionalities through a defined interface. For example, the interface can be software written in JAVA, C++, or a language providing data in extensible markup language (XML) format. While illustrated as an integrated component of the computer 500, in alternative implementations, the API 512 or the service layer can be stand-alone components in relation to other components of the computer 500 and other components communicably coupled to the computer 500. Moreover, any or all parts of the API or the service layer can be implemented as child or sub-modules of another software module, enterprise application, or hardware module without departing from the scope of the present disclosure.

The computer 500 includes interfaces 520. Two or more interfaces 520 can be used according to particular needs, desires, or particular implementations of the computer 500 and the described functionality. The interfaces 520 can be used by the computer 500 for communicating with other systems that are connected to the network 518 (whether illustrated or not) in a distributed environment. Generally, the interfaces 520 can include, or be implemented using, logic encoded in software or hardware (or a combination of software and hardware) operable to communicate with the network 518. More specifically, the interfaces 520 can include software supporting one or more communication protocols associated with communications. As such, the network 518 or the interface's hardware can be operable to communicate physical signals within and outside of the illustrated computer 500.

The computer 500 includes a processor 504. Although illustrated as a single processor 504 in Fig. 4, two or more processors 504 can be used according to particular needs, desires, or particular implementations of the computer 500 and the described functionality. Generally, the processor 404 can execute instructions 502a stored in a non-transient memory 502 and can manipulate data to perform the operations of the computer 500, including operations using algorithms, methods, functions, processes, flows, and procedures as described in the present disclosure.

The computer 500 also includes a database in the non-transient memory 502 that can hold data for the computer 500 and other components connected to the network 530 (whether illustrated or not). For example, database can be an in-memory, conventional, or a database storing data consistent with the present disclosure. In some implementations, database can be a combination of two or more different database types (for example, hybrid in-memory and conventional databases) according to particular needs, desires, or particular implementations of the computer 500 and the described functionality. Two or more databases (of the same, different, or combination of types) can be used according to particular needs, desires, or particular implementations of the computer 500 and the described functionality. In alternative implementations, the database can be external to the computer 500.

The computer 500 also includes a memory 502 that can hold data for the computer 500 or a combination of components connected to the network 518 (whether illustrated or not). Memory 502 can store any data consistent with the present disclosure. In some implementations, memory 502 can be a combination of two or more different types of memory (for example, a combination of semiconductor and magnetic storage) according to particular needs, desires, or particular implementations of the computer 500 and the described functionality. Although illustrated as a single memory 500 in Fig. 4, two or more memories 502 (of the same, different, or combination of types) can be used according to particular needs, desires, or particular implementations of the computer 500 and the described functionality. While memory 502 is illustrated as an internal component of the computer 400, in alternative implementations, memory 502 can be external to the computer 500.

The computer 500 can also include a power supply 512. The power supply 512 can include a rechargeable or non-rechargeable battery that can be configured to be either user- or non-user-replaceable. In some implementations, the power supply 512 can include power-conversion and management circuits, including recharging, standby, and power management functionalities. In some implementations, the power-supply 512 can include a power plug to allow the computer 500 to be plugged into a wall socket or a power source to, for example, power the computer 500 or recharge a rechargeable battery.

There can be any number of computers 500 associated with, or external to, a computer system containing computer 500, with each computer 500 communicating over network 518. Further, the terms "client," "user," and other appropriate terminology can be used interchangeably, as appropriate, without departing from the scope of the present disclosure. Moreover, the present disclosure contemplates that many users can use one computer 500 and one user can use multiple computers 502.

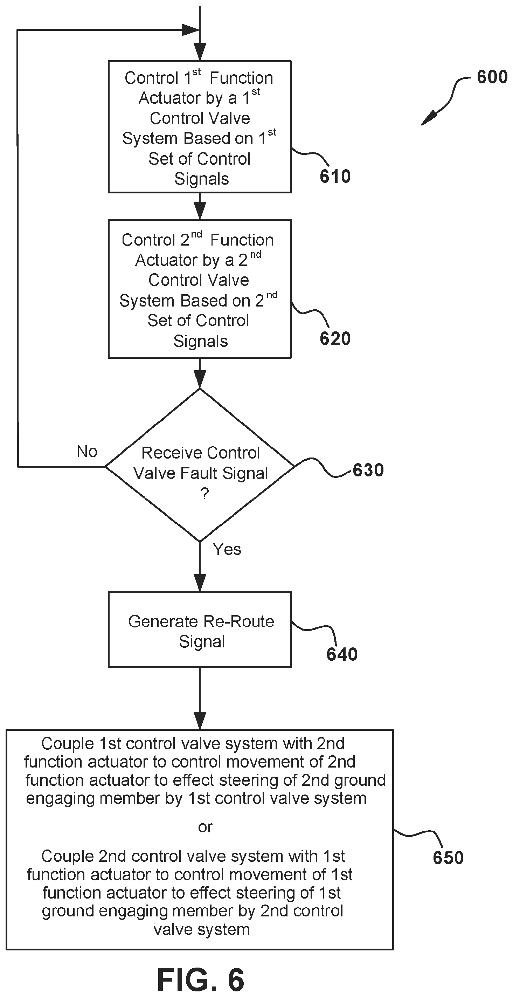

Fig. 6 is a flow diagram illustrating one example implementation of a method 600 for performing steer-by-wire control of electrohydraulic systems in accordance with an example implementation.

At 610 a first function actuator is controlled by a first control valve system based on a first set of one or more control signals.

At 620 a second function actuator is controlled by a second control valve system based on a second set of one or more control signals.

Based on obtaining a control valve fault signal at 630 by an electronic control system operatively coupled with the first and second control valve systems, the electronic control system generates a re-route signal at 640.

Responsive to receiving the control valve fault signal by a routing valve system operatively coupled with the electronic control system, the first and second control valve systems, and the first and second function actuators: the first control valve system is coupled at 650 with the second function actuator to control the movement of the second function actuator to effect the steering of the second ground engaging member by the first control valve system, or the second control valve system is coupled at 650 with the first function actuator to control the movement of the first function actuator to effect the steering of the first ground engaging member by the second control valve system.

## Claims

1. A by-wire electrohydraulic steering system (10) for a work vehicle (1) having first and second ground engaging members (2, 3), the electrohydraulic system (10) comprising:
a first control valve system (20) responsive to a first set of control signals (22) to control movement of a first function actuator (120) coupled with the first ground engaging member (2) of the work vehicle (1) to effect steering of the first ground engaging member (2);
a second control valve system (30) responsive to a second set of control signals (32) to control movement of a second function actuator (130) coupled with the second ground engaging member (3) of the work vehicle (1) to effect steering of the second ground engaging member (3);
an electronic control system (40) operatively coupled with the first and second control valve systems (20, 30), the electronic control system (40) being operable to generate the first and second sets of control signals for controlling steering of the first and second ground engaging members (2, 3), the electronic control system (40) being operative to generate a re-route signal (42) based on an obtained control valve fault signal (44); and
a routing valve system (50) operatively coupled with the electronic control system (40), the first and second control valve systems (20, 30), and the first and second function actuators (120, 130), the routing valve system (50) being responsive to receiving the re-route signal (42) from the electronic control system (40) to:
couple the first control valve system (20) with the second function actuator (130) to control movement of the second function actuator (130) to effect the steering of the second ground engaging member (3) by the first control valve system (20), or
couple the second control valve system (30) with the first function actuator (120) to control movement of the first function actuator (120) to effect the steering of the first ground engaging member (2) by the second control valve system (30).

2. The system (10) according to claim 1, wherein:
the routing valve system (50) is responsive to receiving the re-route signal (42) from the electronic control system (40) to:
control the steering of both the first and second ground engaging members (2, 3) by the first control valve system (20), or
control the steering of both the first and second ground engaging members (2, 3) by the second control valve system (30).

3. The system (10) according to claim 1 or 2, wherein:
the electronic control system (40) is operatively coupled with an electronic control module (ECM) 6 of the work vehicle (1);
the electronic control system (40) is operative to obtain the control valve fault signal (44) by receiving the control valve fault signal (44) from a ECM (6) of the work vehicle (1); and
the electronic control system (40) is operative to generate the re-route signal (42) based on receiving the control valve fault signal (44) from the ECM (6) of the work vehicle (1).

4. The system (10) according to one of the claims 1 to 3, wherein:
the electronic control system (40) is operative to:
obtain the control valve fault signal (44) as a first control valve fault signal (43) representative of a first fault condition detected in the first control valve system (20); and
generate the re-route signal (42) as a first re-route signal (41) based on the obtained first control valve fault signal (43); and
the routing valve system (50) is responsive to receiving the first re-route signal (41) from the electronic control system (40) to:
couple the second control valve system (30) with the first function actuator (120) to control the movement of the first function actuator (120) to effect the steering of the first ground engaging member (2) by the second control valve system (30).

5. The system (10) according to claim 4, wherein:
the electronic control system (40) is operatively coupled with an electronic control module (ECM) (6) of the work vehicle (1);
the electronic control system (40) is operative to obtain the first control valve fault signal (43) by receiving the first control valve fault signal (43) from the ECM (6) of the work vehicle (1); and
the electronic control system (40) is operative to generate the first re-route signal (41) based on receiving the first control valve fault signal (43) from the ECM (6) of the work vehicle (1).

6. The system (10) according to claim 4 or 5, wherein:
the electronic control system (40) is operative to:
obtain the control valve fault signal (44) as a second control valve fault signal (45) representative of a second fault condition detected in the second control valve system (30); and
generate the re-route signal (42) as a second re-route signal (47) based on the obtained second control valve fault signal (45); and
the routing valve system (50) is responsive to receiving the second re-route signal (47) from the electronic control system (40) to:
couple the first control valve system (20) with the second function actuator (130) to control the movement of the second function actuator (130) to effect the steering of the second ground engaging member (3) by the first control valve system (20).

7. The system (10) according to one of the claims 4 to 6, wherein:
the electronic control system (40) is operatively coupled with an electronic control module ECM (6) of the work vehicle (1);
the electronic control system (40) is operative to obtain the second control valve fault signal (45) by receiving the second control valve fault signal (45) from the ECM (6) of the work vehicle (1); and
the electronic control system (40) is operative to generate the second re-route signal (47) based on receiving the second control valve fault signal (45) from the ECM (6) of the work vehicle (1).

8. The system (10) according to one of the claims 1 to 7, further comprising:
a first set of control valve system sensors (60) operatively coupled with the electronic control system (40), the first set of control valve system sensors (60) being operative to generate a set of first valve system functionality signals (62) representative of an operational condition of the first control valve system (20); and
a second set of control valve system sensors (70) operatively coupled with the second control valve system (30), the second set of control valve system sensors (70) being operative to generate a set of second valve system functionality signals (72) representative of an operational condition of the second control valve system (30),
wherein the electronic control system (40) is operative to:
receive the set of first valve system functionality signals (62);
receive the set of second valve system functionality signals (72);
obtain the control valve fault signal (44) by generating the control valve fault signal (44) based on the received sets of the first and second valve system functionality signals (72); and
generate the re-route signal (42) based on the generated control valve fault signal (44).

9. The system (10) according to one of the claims 4 to 8, wherein:
the electronic control system (40) is operatively coupled with the electronic control module ECM (6) of the work vehicle (1); and
the electronic control system (40) is operative to transmit a steering alert signal representative of the generated control valve fault signal (44) to the ECM (6) of the work vehicle (1).

10. The system (10) according to one of the claims 1 to 9, wherein:
the routing valve system (50) comprises at least one valve (50', 50", 50‴, 50ʺʺ) responsive to receiving the re-route signal (42) from the electronic control system (40) to:
couple the first control valve system (20) with the second function actuator (130) to control the movement of the second function actuator (130) to effect the steering of the second ground engaging member (3) by the first control valve system (20), or
couple the second control valve system (30) with the first function actuator (120) to control the movement of the first function actuator (120) to effect the steering of the first ground engaging member (2) by the second control valve system (30).

11. The system (10) according to claim 10, wherein:
the at least one valve (50', 50", 50‴, 50ʺʺ) comprises a valve responsive to receiving the re-route signal (42) from the electronic control system (40) to:
couple the first control valve system (20) with the first and second function actuators (120, 130) to control the movement of the first and second function actuators (120, 130) to effect the steering of the first and second ground engaging members (2, 3) in mutual phase synchronization with each other by the first control valve system (20), or
couple the second control valve system (30) with the first and second function actuators (120, 130) to control the movement of the first and second function actuators (120, 130) to effect the steering of the first and second ground engaging members (2, 3) in mutual phase synchronization with each other by the second control valve system (30).

12. A method (600) of steer-by-wire control of an electrohydraulic system (10) of a work vehicle (1) having first and second ground engaging members (2, 3), the method comprising the system (10) of one of the claims 1 to 11 and further:
controlling (610) by a first control valve system (20) responsive to a first set of control signals (22) movement of a first function actuator (120) coupled with the first ground engaging member (2) of the work vehicle (1) to effect steering of the first ground engaging member (2);
controlling (620) by a second control valve system (30) responsive to a second set of control signals (32) movement of a second function actuator (130) coupled with the second ground engaging member (3) of the work vehicle (1) to effect steering of the second ground engaging member (3);
generating (640) by an electronic control system (40) operatively coupled with the first and second control valve system (20, 30) a re-route signal (42) based on an obtained control valve fault signal (44); and
responsive to receiving the re-route signal (42) by a routing valve system (50) operatively coupled with the electronic control system (40), the first and second control valve systems (20, 30), and the first and second function actuators (120, 130), coupling (650):
the first control valve system (20) with the second function actuator (130) to control the movement of the second function actuator (130) to effect the steering of the second ground engaging member (3) by the first control valve system (20) or
the second control valve system (30) with the first function actuator (120) to control the movement of the first function actuator (120) to effect the steering of the first ground engaging member (2) by the second control valve system (30).

13. The method (600) according to claim 12, further comprising:
responsive to receiving the re-route signal (42) by the routing valve system (50) operatively coupled with the electronic control system (40):
controlling the steering of both the first and second ground engaging members (2, 3) by the first control valve system (20), or
controlling the steering of both the first and second ground engaging members (2, 3) by the second control valve system (30).

14. The method (600) according to claim 12 or 13, further comprising:
obtaining the control valve fault signal (44) by the electronic control system (40) as a first control valve fault signal 43 representative of a first fault condition detected in the first control valve system (20);
generating the re-route signal (42) by the electronic control system (40) as a first re-route signal (41) based on the obtained first control valve fault signal (43); and
coupling the second control valve system (30) with the first function actuator (120) by the routing valve system (50) responsive to receiving the first re-route signal (41) from the electronic control system (40) to control the movement of the first function actuator (120) to effect the steering of the first ground engaging member (2) by the second control valve system (30).

15. The method (600) according to one of the claims 12 to 14, further comprising:
generating a set of first valve system functionality signals (62) by a first set of control valve system sensors (60) operatively coupled with the electronic control system (40), the set of first valve system functionality signals (62) being representative of an operational condition of the first control valve system (20);
generating a set of second valve system functionality signals (72) by a second set of control valve system sensors (70) operatively coupled with the electronic control system (40), the set of second valve system functionality signals (72) being representative of an operational condition of the second control valve system (30);
receiving by the electronic control system (40) the set of first valve system functionality signals (62);
receiving by the electronic control system (40) the set of second valve system functionality signals (72);
obtaining by the electronic control system (40) the control valve fault signal (44) by generating the control valve fault signal (44) based on the received sets of the first and second valve system functionality signals (72); and
generating the re-route signal (42) by the electronic control system (40) based on the generated control valve fault signal (44).
